**Europäisches Patentamt**

**European Patent Office**

**Office européen des brevets**

(19)

(11) Numéro de publication: **0 139 578**

**A1**

(12) ## DEMANDE DE BREVET EUROPEEN

(21) Numéro de dépôt: **84401979.4**

(22) Date de dépôt: **04.10.84**

(51) Int. Cl.⁴: **F 16 H 47/06**

(30) Priorité: **12.10.83 FR 8316209**

(43) Date de publication de la demande:
**02.05.85 Bulletin 85/18**

(84) Etats contractants désignés:
**DE GB IT NL SE**

(71) Demandeur: **REGIE NATIONALE DES USINES RENAULT**
**Boîte postale 103 8-10 avenue Emile Zola**
**F-92109 Boulogne-Billancourt(FR)**

(72) Inventeur: **Baudoin, Patrice**
**3, Allée des Carrougeaux**
**F-78620 L'Etang-La-Ville(FR)**

(74) Mandataire: **Chassagnon, Jean-Alain et al,**
**REGIE NATIONALE DES USINES RENAULT (S.0804)**
**F-92109 Boulogne-Billancourt Cedex(FR)**

(54) Variateur à convertisseur inverseur intégré.

(57) Variateur à convertisseur inverseur intégré, dont le convertisseur (1) comporte un réacteur (22) solidaire en rotation de la poulie primaire du variateur (14) et une turbine (21), qui peut être rendue solidaire en rotation du réacteur (22) par un embrayage (3), ou qui peut être bloquée par un frein (4). L'impulseur (20) du convertisseur (1) est situé du côté du moteur, et la turbine (21) est située du côté du variateur (2). L'embrayage (3) et le frein (4) sont disposés entre le convertisseur (1) et le flasque fixe (16) de la poulie primaire du variateur (14).

Application principale : Transmissions pour véhicules.

EP 0 139 578 A1

./...

Croydon Printing Company Ltd.

FIG. 3

## VARIATEUR A CONVERTISSEUR INVERSEUR INTEGRE

La présente invention se rapporte à un variateur à convertisseur inverseur intégré qui s'applique notamment à des véhicules automobiles à moteur transversal.

On connaît des ensembles de transmissions à variateur comportant un convertisseur inverseur à l'entrée. La disposition classique de ce convertisseur oblige à disposer les organes de commande à l'extrémité de l'axe du convertisseur, à l'extérieur du variateur proprement dit. Ces dispositifs connus présentent ainsi l'inconvénient d'être relativement encombrants et coûteux.

Le but de la présente invention est de proposer une transmission à variateur qui intègre parfaitement le convertisseur inverseur avec ses éléments de commande.

A cet effet, l'invention a pour objet un variateur à convertisseur inverseur intégré, dont le convertisseur comporte un réacteur solidaire en rotation de la poulie primaire du variateur et une turbine qui peut être rendue solidaire en rotation du réacteur par un embrayage, ou qui peut être bloquée par un frein. L'impulseur du convertisseur est situé du côté du moteur, et la turbine est située du côté du variateur. L'embrayage et le frein sont disposés entre le convertisseur et le flasque fixe de la poulie primaire du variateur.

Selon un mode de réalisation de l'invention, une pompe est disposée entre le convertisseur d'une part, et l'embrayage et le frein d'autre part ; ladite pompe étant entraînée par l'arbre d'impulseur solidaire de la coquille de fermeture du convertisseur.

Selon un mode de réalisation de l'invention, la pompe est montée dans une cloison-support.

Selon un mode de réalisation de l'invention, la poulie primaire du variateur comporte un arbre unique.

Selon un mode de réalisation de l'invention, l'arbre unique de la poulie primaire du variateur, l'arbre du réacteur et le flasque fixe forment une seule et même pièce.

Selon un mode de réalisation de l'invention, un dispositif de pontage relie le réacteur et l'impulseur.

Selon un mode de réalisation de l'invention, le dispositif de pontage comporte un flasque d'embrayage de pontage solidaire d'une couronne de réacteur et de ressorts d'amortissement.

Selon un mode de réalisation de l'invention, l'ensemble des carters comporte un carter de convertisseur, un carter de variateur, un carter de mécanisme et un chapeau-palier.

Selon un mode de réalisation de l'invention, le carter de mécanisme est monté dans le carter de variateur et la cloison support est montée dans le carter de variateur, et vient se centrer dans ledit carter de mécanisme.

Selon un mode de réalisation de l'invention, un bloc hydraulique est situé sous le carter de convertisseur.

Selon un mode de réalisation de l'invention, l'embrayage et le frein comportent une même cloche solidaire en rotation de la turbine par l'intermédiaire de l'arbre de turbine.

Selon un mode de réalisation de l'invention, l'alimentation du vérin de l'embrayage se fait par l'arbre unique de la poulie primaire du variateur.

La présente transmission à variateur à convertisseur inverseur intégré présente ainsi l'avantage de proposer un dispositif particulièrement peu encombrant. Il est aussi relativement peu onéreux, en particulier du fait de la simplicité de l'ensemble mécanique disposé sur l'axe du convertisseur et de la poulie primaire du variateur.

D'autres caractéristiques et avantages de la présente invention ressortiront de la description qui suit de modes de réalisation donnée à titre d'exemple, en référence aux dessins annexés sur lesquels :

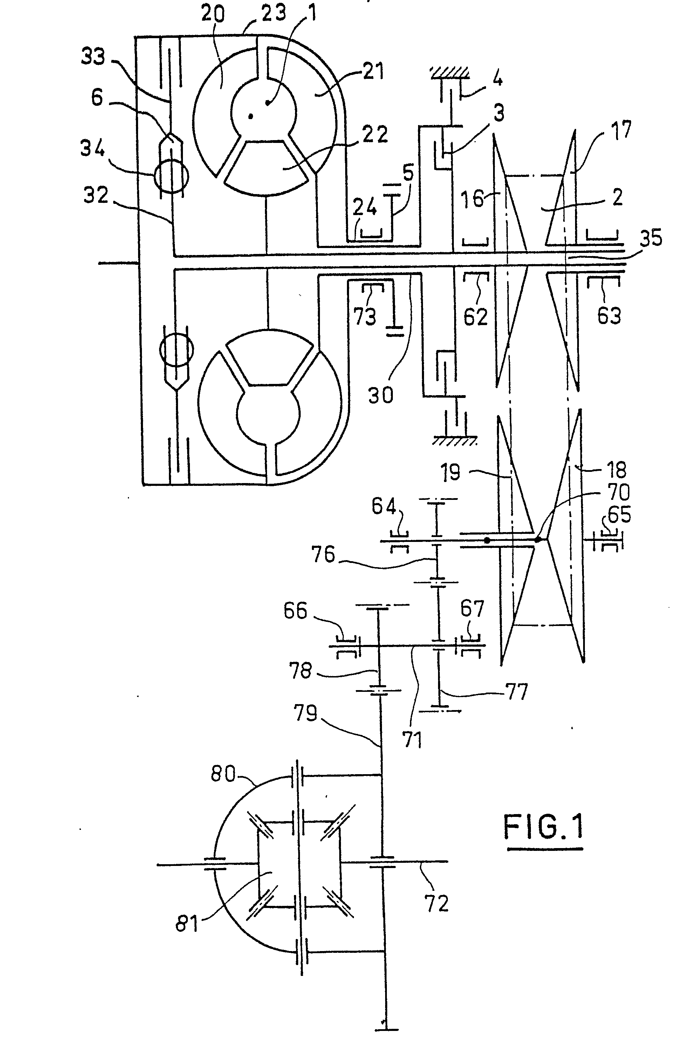

- la figure 1 est un schéma du variateur à convertisseur inverseur intégré selon l'invention ;

- la figure 2 est une vue en coupe longitudinale du variateur à convertisseur inverseur intégré selon l'invention ;

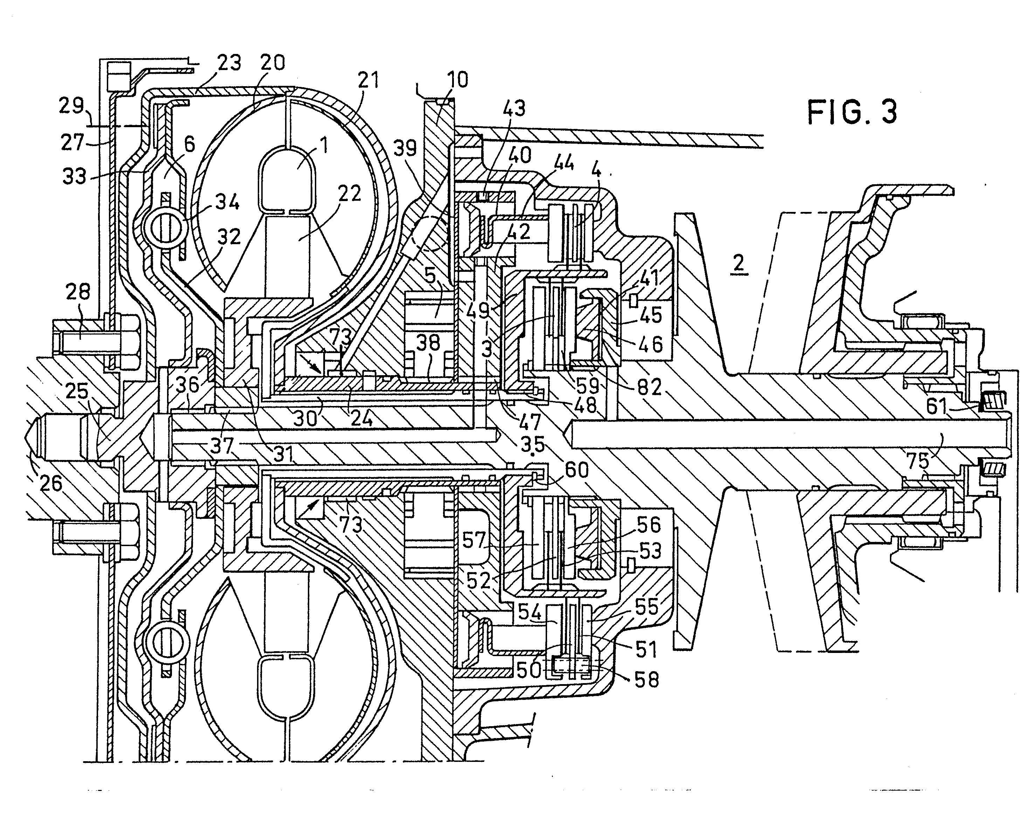

- la figure 3 est une vue en coupe longitudinale de l'ensemble selon l'invention disposé sur l'axe du convertisseur et de la poulie primaire du variateur ;

- la figure 4 est une vue suivant IV de la disposition des axes de la figure 2.

0139578

- 4 -

La transmission à variateur à convertisseur inverseur
intégré selon l'invention comprend essentiellement :

- un convertisseur hydro cinétique de couple 1 ;

- un variateur à courroie ou à chaîne 2 ;

- une descente de mouvement vers les roues motrices
  incorporant un différentiel.

Le convertisseur hydro cinétique de couple 1 et la
poulie primaire 14 du variateur 2 sont montés sur le
même axe. La poulie secondaire 15 du variateur 2 est
portée par un arbre 70 qui supporte un pignon
de descente 76, ledit pignon 76 étant solidaire en
rotation de l'arbre secondaire 70. Un arbre intermédiaire 71 porte un pignon 77 qui engrène avec le
pignon 76. Cet arbre intermédiaire 71 porte également
un pignon 78. Les pignons 77 et 78 sont solidaires en
rotation avec l'arbre intermédiaire 71. Le pignon 78
commande une couronnne 79 solidaire d'un boîtier 80 de
différentiel 81. L'ensemble du différentiel a ses deux
sorties de mouvement suivant l'axe du différentiel 72.

On appelle :

A/ l'axe du convertisseur hydro cinétique de couple 1 et
de la poulie primaire 14 du variateur 2 ;

B/ l'axe de la poulie secondaire 15 du variateur 2 ;

C/ l'axe de l'arbre intermédiaire 71 ;

D/ l'axe du différentiel 72.

0139578

- 5 -

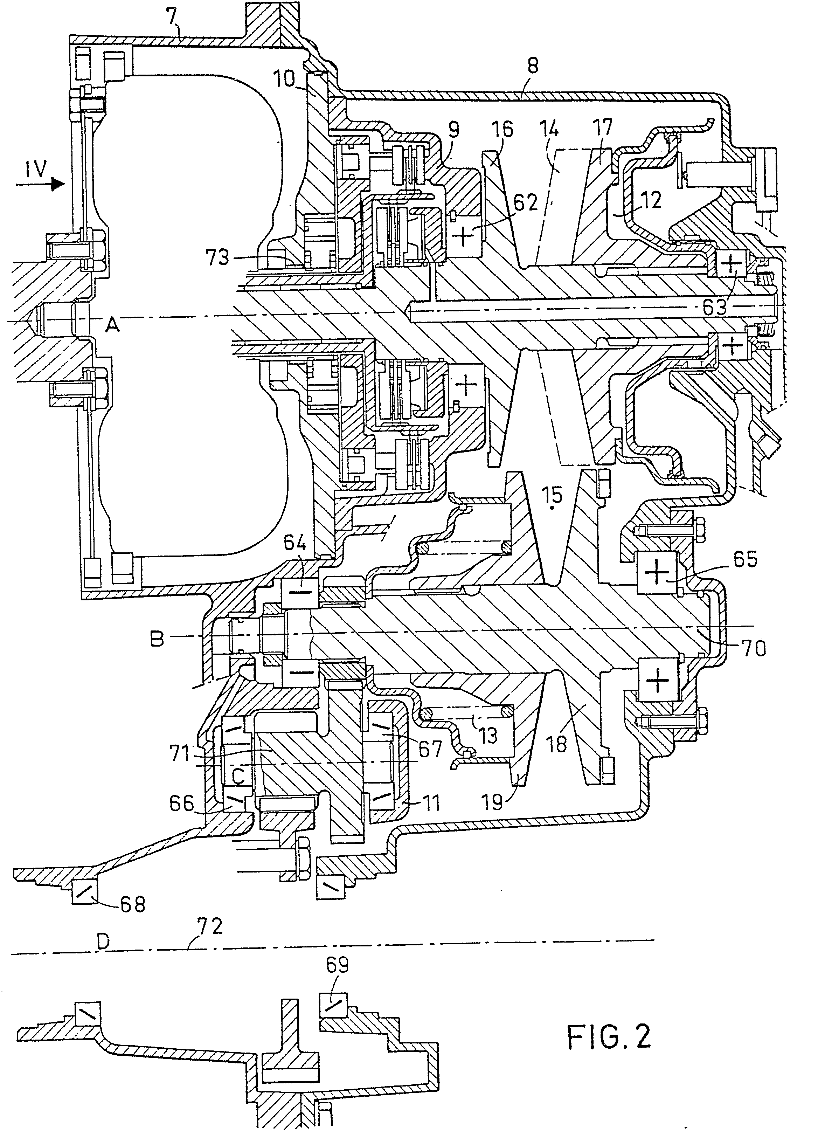

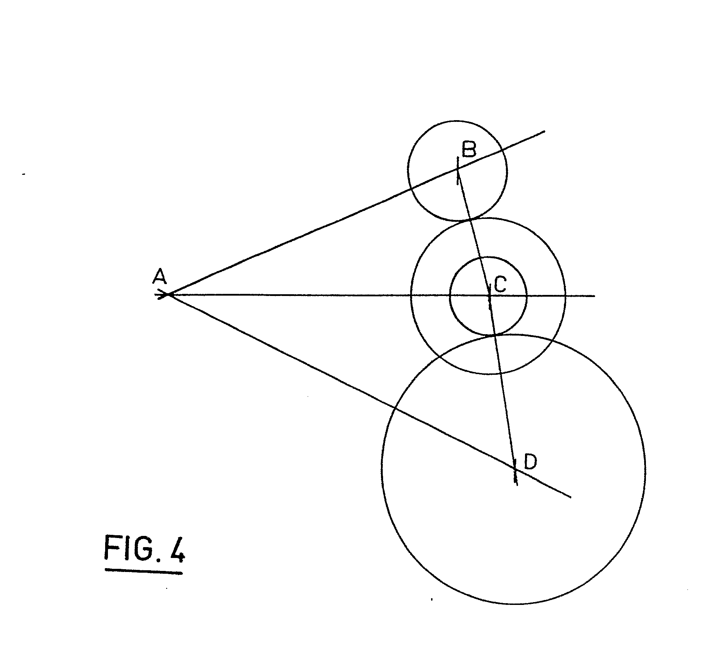

Les quatre axes parallèles A, B, C, D ne sont pas coplanaires. On voit la disposition de ces axes sur la figure 4. La figure 2 est en fait une coupe longitudinale suivant les plans A B, B C, et C D.

Le variateur à convertisseur inverseur intégré selon l'invention est enfermé dans un ensemble de carters, comprenant essentiellement un carter de convertisseur 7 qui vient se monter sur un carter de variateur 8. Un carter de mécanisme 9 est fixé dans le carter de variateur 8. Une cloison-support 10 vient se plaquer contre le carter de mécanisme 9, qui assure également le centrage de ladite cloison-support 10. La cloison-support 10 est montée également dans le carter de variateur 8. Un chapeau-palier 11 est fixé sur le carter de convertisseur 7.

L'ensemble disposé sur l'axe du convertisseur hydrocinétique de couple 1 et de la poulie primaire 14 du variateur 2 est supporté par : la cage à aiguilles 73 montée dans la cloison-support 10, le roulement 62 monté dans le carter de mécanisme 9, et le roulement 63 monté dans le carter de variateur 8.

L'ensemble du dispositif de l'arbre secondaire 70 du variateur 2, qui comporte également le pignon 76, est monté sur : un roulement 64 monté dans le carter de variateur 8, et un roulement 65 monté également dans le carter de variateur 8.

L'ensemble de l'arbre intermédiaire 71 comportant les pignons 77 et 78 est monté sur : un roulement 66 qui est monté dans le carter de convertisseur 7, et un roulement 67 qui est monté dans le chapeau-palier 11.

L'ensemble boîtier de différentiel 80 avec la couronne 79 du différentiel 81 est monté suivant l'axe 72 par l'intermédiaire : d'un roulement 68 disposé dans le carter de convertisseur 7, et par un roulement 69 disposé dans le carter de variateur 8.

Dans un autre mode de réalisation de l'invention, non représenté sur les figures, la cloison-support 10 est montée dans le carter de convertisseur 7.

Un bloc hydraulique 74, non représenté sur les figures, est disposé sous le carter de convertisseur 7.

L'ensemble, disposé sur l'axe du convertisseur hydrocinétique de couple 1 et de la poulie primaire 14 du variateur 2, comporte :

- le convertisseur hydrocinétique de couple 1 ;

- une pompe hydraulique 5 disposée dans la cloison-support 10 (cette pompe hydraulique peut être à débit fixe ou à débit variable) ;

- un embrayage 3 et un frein 4 disposés dans le carter de mécanisme 9 ;

- la poulie primaire 14 du variateur 2 ;

- un vérin 12 de la poulie primaire 14.

Le convertisseur hydrocinétique de couple 1 comporte un impulseur 20, une turbine 21, et un réacteur 22. L'impulseur 20 est situé du côté du moteur et est relié à une coquille de fermeture du convertisseur 23 afin d'assurer la fermeture du circuit du convertisseur 1.

Cette coquille de fermeture du convertisseur 23 est reliée, d'une part à un nez d'impulseur 25 qui vient s'engager dans le vilebrequin 26 et d'autre part un arbre d'impulseur 24. La turbine 21 est reliée à un arbre de turbine 30. Le réacteur 22 est monté sur un moyeu de réacteur 31 qui porte une couronne de réacteur 32. Cette couronne de réacteur 32 fait partie du dispositif de pontage 6 du convertisseur 1. Ce dispositif de pontage 6 comporte également un flasque d'embrayage de pontage 33 et des ressorts d'amortissement 34. Sur le vilebrequin 26 est montée une tôle d'entraînement 27 fixée à l'aide de vis 28. Cette tôle d'entraînement 27 est également fixée par des vis 29 sur la coquille de fermeture du convertisseur 23. Le réacteur 22 est monté sur un arbre de réacteur 35 et est solidaire en rotation de cet arbre à l'aide de cannelures 37. Cet arbre de réacteur 35 vient se monter dans le nez d'impulseur 25 à l'aide d'une bague 36.

La pompe hydraulique 5 est montée à l'intérieur de la cloison-support 10 et est solidaire en rotation de l'arbre d'impulseur 24 à l'aide des cannelures 38.

L'embrayage 3 et le frein 4 sont montés de part et d'autre d'une cloche 49. La cloche 49 est solidaire en rotation avec l'arbre de turbine 30 à l'aide des cannelures 48. L'embrayage 3 est actionné par un vérin d'embrayage 41. Le frein 4 est actionné par un vérin de frein 40.

L'embrayage 3 est constitué par des disques lisses 52 solidaires en rotation de l'arbre de réacteur 35, et par des disques garnis 53 solidaires en rotation de la cloche 49. Cet embrayage 3 comporte de plus un plateau de poussée 56 et un plateau d'appui 57. Cet embrayage 3 est également muni de ressorts de rappel 59. Le vérin d'embrayage 41 comporte un corps de vérin 45 et un piston 46. Le corps de vérin 45 est solidaire en rotation avec l'arbre de réacteur 35 par des cannelures 82.

Le frein 4 est constitué par des disques lisses 50 solidaires du carter de mécanisme 9 et par des disques garnis 51 solidaires en rotation de la cloche 49. Ce frein comporte également un plateau de poussée 54 et un plateau d'appui 55. Ce frein 4 comporte des ressorts de rappel 58. Le vérin de frein 40 est constitué d'un corps de vérin ou moyeu d'alimentation 42 et d'un anneau de vérin 43. Le corps du vérin 42 se monte sur l'arbre d'impulseur 24 à l'aide d'une bague 47. L'anneau de vérin 43 vient se centrer sur la cloison-support 10. Une tôle d'étanchéité 39 est maintenue entre la pompe 5 et le corps du vérin 42 et l'anneau de vérin 43. Un piston 44 est monté à l'intérieur de l'anneau du vérin 43 et sur le corps du vérin 42.

La cloison-support 10 est prolongée du côté du convertisseur et comporte la cage à aiguilles 73 qui supporte l'arbre d'impulseur 24.

La poulie primaire 14 du variateur 2 comporte un flasque fixe 16 et un flasque mobile 17 sur lequel agit le vérin 12 de la poulie primaire 14. Ce dernier ensemble est bloqué sur l'arbre du réacteur 35 par un écrou 61.

De plus, l'alimentation du vérin 41 de l'embrayage 3 est assurée par un canal central 75 disposé dans l'arbre de réacteur 35.

L'ensemble monté sur l'arbre secondaire 70 du variateur 2 comprend : la poulie secondaire 15 du variateur 2, avec un flasque fixe 18 et un flasque mobile 19, un vérin de poulie secondaire 13, et le pignon 76.

Le convertisseur hydro cinétique de couple 1 a ses trois éléments qui sont reliés de la façon suivante :

- l'impulseur 20 est solidaire en rotation du moteur d'entraînement ;

- le réacteur 22 est solidaire en rotation de la poulie primaire 14 du variateur 2 ;

- la turbine 21 est soit rendue solidaire en rotation du réacteur 22 par un embrayage 3, soit elle est arrêtée par rapport au carter de mécanisme 9 par un frein 4.

L'embrayage 3 et le frein 4 sont actionnés respectivement par les vérins d'embrayage 41 et de frein 40. Ces vérins 40 et 41 sont pilotés hydrauliquement par le bloc hydraulique 74 qui est alimenté par la pompe 5. Lorsque la turbine est solidaire du réacteur, on a la configuration de marche avant, dans ce cas le convertisseur fonctionne comme un coupleur. Lorsque la turbine est bloquée par rapport au carter de mécanisme 9, on a la configuration de marche arrière.

Ce mode d'utilisation d'un convertisseur, qui est inhabituel est néanmoins connu. Il permet d'assurer les fonctions de démarrage et d'inversion du sens de marche avec simplement : un convertisseur, un embrayage et un frein. Cette disposition permet donc une grande économie de moyens, tout en assurant un excellent confort de démarrage.

Le dispositif de pilotage de l'embrayage 3 et du frein 4, par l'intermédiaire de la pompe 5 et du bloc hydraulique 74, engendre différentes pressions qui sont modulées selon les conditions de marche. Ce dispositif de pilotage agit également sur les vérins 12 et 13 de la poulie primaire 14 et de la poulie secondaire 15 du variateur 2. Ce dispositif de pilotage peut agir également sur le dispositif de pontage 6 aménagé à l'intérieur du convertisseur hydrocinétique de couple 1. Le dispositif de pontage 6, lorsqu'il agit, rend solidaire en rotation le réacteur 22 avec l'impulseur 20.

La disposition inhabituelle du convertisseur hydrocinétique de couple 1 avec l'impulseur 20 situé du côté du moteur d'entraînement, combinée avec la disposition de l'embrayage 3 et du frein 4 qui sont situés entre ledit convertisseur 1 et le variateur 2 permet une réduction notable de l'encombrement de l'ensemble. D'autre part, cette disposition du convertisseur, de l'embrayage et du frein permet d'avoir un arbre unique 35 pour la poulie primaire 14 du variateur 2.

De plus, cette disposition permet de placer la pompe hydraulique 5 dans la cloison-support 10 située au plus près du convertisseur hydrocinétique de couple 1. En effet, la pompe peut être entraînée par l'arbre d'impulseur 24 solidaire de la coquille de fermeture du convertisseur 23.

REVENDICATIONS

1. Variateur à convertisseur inverseur intégré, dont le convertisseur (1) comporte un réacteur (22) solidaire en rotation de la poulie primaire du variateur (14), et une turbine (21) qui peut être rendue solidaire en rotation du réacteur (22) par un embrayage (3), ou qui peut être bloquée par un frein (4), caractérisé en ce que l'impulseur (20) du convertisseur (1) est situé du côté du moteur, que la turbine (21) est située du côté du variateur (2), et que l'embrayage (3) et le frein (4) sont disposés entre le convertisseur (1) et le flasque fixe (16) de la poulie primaire du variateur (14).

2. Variateur selon la revendication 1, caractérisé en ce qu'une pompe (5) est disposée entre le convertisseur (1) d'une part et l'embrayage (3) et le frein (4) d'autre part ; ladite pompe (5) étant entraînée par l'arbre d'impulseur (24) solidaire de la coquille de fermeture du convertisseur (23).

3. Variateur selon la revendication 2, caractérisé en ce que la pompe (5) est montée dans une cloison-support (10).

4. Variateur selon la revendication 2, caractérisé en ce que la poulie primaire du variateur (14) comporte un arbre unique.

5. Variateur selon la revendication 4, caractérisé en ce que l'arbre unique de la poulie.primaire du variateur, l'arbre du réacteur et le flasque fixe forment une seule et même pièce (35).

6. Variateur selon la revendication 1, caractérisé en ce qu'un dispositif de pontage (6) relie le réacteur (22) et l'impulseur (20).

7. Variateur selon la revendication 6, caractérisé en ce que le dispositif de pontage (6) comporte un flasque d'embrayage de pontage (33) solidaire d'une couronne de réacteur (32) et de ressorts d'amortissement (34).

8. Variateur selon l'une des revendications précédentes caractérisé en ce que l'ensemble des carters comporte un carter de convertisseur (7), un carter de variateur (8), un carter de mécanisme (9) et un chapeau-palier (11).

9. Variateur selon la revendication 8, caractérisé en ce que le carter de mécanisme (9) est monté dans le carter de variateur (8), et que la cloison-support (10) est montée dans le carter de variateur (8), et vient se centrer dans ledit carter de mécanisme (9).

10. Variateur selon la revendication 8, caractérisé en ce qu'un bloc hydraulique (74) est situé sous le carter de convertisseur (7).

11. Variateur selon la revendication 1, caractérisé en ce que l'embrayage (3) et le frein (4) comportent une même cloche (49) solidaire en rotation de la turbine (21) par l'intermédiaire de l'arbre de turbine (30).

12. Variateur selon la revendication 11, caractérisé en ce que l'alimentation du vérin de l'embrayage (41) se fait par l'arbre unique (35) de la poulie primaire du variateur.

FIG.1

2/4   0139578

FIG. 2

FIG. 3

0139578

4/4

FIG. 4

Office européen
des brevets

**RAPPORT DE RECHERCHE EUROPEENNE**

**0139578**

Numéro de la demande

EP 84 40 1979

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| Y | EP-A-0 081 260 (VAN DOORNE'S) <br> * Pages 4,5; figures * | 1,6 | F 16 H 47/06 |
| | --- | | |
| Y | FR-A- 743 184 (RAPHAEL) <br> * Page 2; figure 1 * | 1,6 | |
| | --- | | |
| A | FR-A-2 268 200 (6M) <br> * Page 3; figures * | 2,3 | |
| | --- | | |
| A | EP-A-0 061 736 (NISSAN) <br><br> * Pages 5,6; figure 2 * | 1,4,6, 8 | |
| | --- | | |
| A | US-A-4 125 037 (GKN) | | |
| | ----- | | **DOMAINES TECHNIQUES RECHERCHES (Int. Cl.4)** |
| | | | F 16 H 47/00 <br> F 16 H 37/00 <br> F 16 H 41/00 |

Le présent rapport de recherche a été établi pour toutes les revendications

| Lieu de la recherche | Date d'achèvement de la recherche | Examinateur |
|---|---|---|
| LA HAYE | 07-12-1984 | FLORES E. |